# EUROPÄISCHE PATENTSCHRIFT

(11) **EP 2 000 866 B1**
(45) Veröffentlichungstag und Bekanntmachung des Hinweises auf die Patenterteilung: **01.03.2017**
(21) Anmeldenummer: 08009811.4
(22) Anmeldetag: 29.05.2008
(51) Int. Cl.: G05B 19/042

(54) **Überwachungseinrichtung zur Erkennung einer fehlerhaften Adressierung eines Slaves in einem Feldbus-System**
Monitoring device for detecting an incorrect addressing of a slave in a fieldbus-system
Dispositif de surveillance destiné à la reconnaissance d'un adressage incorrect d'un esclave dans un système de bus de terrain

(30) Priorität: 01.06.2007 DE 102007025852
(43) Veröffentlichungstag der Anmeldung: 10.12.2008
(73) Patentinhaber: ifm electronic gmbh, 45128 Essen (DE)
(72) Erfinder: Gohr, Andreas, 88212 Ravensburg (DE); Füßl, Bernd, 88097 Eriskirch (DE)
(74) Vertreter: Gesthuysen Patent- und Rechtsanwälte

(56) Entgegenhaltungen:
- DE-A1- 10 104 908
- DE-A1- 10 134 538
- DE-A1- 10 253 566
- US-A- 4 186 339

## Beschreibung

Die Erfindung betrifft eine Überwachungseinrichtung zur Erkennung des Zustandes eines Busses, insbesondere zur Erkennung einer fehlerhaften Adressierung eines Slaves, in einem einen Master, mehreren Slaves, ein Netzteil und einen Signale und Energie übertragenden Bus aufweisenden Feldbus-System gemäß dem Oberbegriff des Patentanspruchs 1.

Außerdem betrifft die Erfindung noch ein entsprechendes Verfahren zur Erkennung des Zustandes eines Busses mit einer Überwachungseinrichtung und ein Aktuator-Sensor-Interface-System mit einem Aktuator-Sensor-Interface-Master, mindestens zwei Aktuator-Sensor-Interface-Slaves, einem Aktuator-Sensor-Interface-Netzteil und einem Aktuator-Sensor-Interface-Bus, wobei das Aktuator-Sensor-Interface-Netzteil die Aktuator-Sensor-Interface-Slaves über den Aktuator-Sensor-Interface-Bus mit einer Gleichspannung versorgt, wobei über den Aktuator-Sensor-Interface-Bus Signale, die als Wechselspannungssignale der Gleichspannung aufmoduliert sind, seriell zwischen dem Aktuator-Sensor-Interface-Master und den Aktuator-Sensor-Interface-Slaves übertragbar sind, wobei jedem Aktuator-Sensor-Interface-Slave eine binäre Adresse zugeordnet ist, so daß jeder Aktuator-Sensor-Interface-Slave durch einen seine Adresse enthaltenden Masteraufruf vom Aktuator-Sensor-Interface-Master zur Abgabe einer Slaveantwort veranlaßt werden kann.

In der Meß- und Automatisierungstechnik werden seit etwa zwei Jahrzehnten verschiedene Bussysteme, die häufig auch als Feldbus-Systeme bezeichnet werden, eingesetzt. Ein wesentliches Merkmal derartiger Bussysteme ist dabei die digitale Übertragung von Informationen über eine Busleitung. Dabei können die unterschiedlichen Bussysteme in drei Ebenen eingeteilt werden. Die erste, oberste Ebene bildet die Feldebene, in der einzelne Automatisierungsinseln untereinander verbunden und zu größeren Einheiten verknüpft werden. Die nächste Ebene bildet die Geräteebene, in der komplexere Sensoren und Aktuatoren sowie einfache Automatisierungsgeräte miteinander und mit einer übergeordneten Steuerung verbunden werden. Die unterste Ebene bildet die Sensor-Akutator Ebene, in der die zahlenmäßig am häufigsten vorkommenden binären Sensoren und Aktuatoren angeschlossen werden. (vgl. "AS-Interface

Die Lösung in der Automation", Rolf Becker, et. al., AS-International Association, 2002, Seite 14 bis 17).

Im Jahre 1990 haben eine größere Anzahl namhafter Aktuator-, Sensor- und Steuerungshersteller mit der industriellen Gemeinschaftsentwicklung eines Aktuator-Sensor-Interface-Systems begonnen, welches als AS-Interface-System oder im folgenden stets als ASI-System bezeichnet wird. Das ASI-System wird als neuartige Schnittstelle seit 1994 für die industrielle Kommunikation eingesetzt und belegt den Bereich unterhalb der bisherigen Feldbussysteme. Es verbindet insbesondere binäre Sensoren und Aktuatoren, aber auch analoge Sensoren über einen gemeinsamen Bus mit der ersten Steuerungsebene, z. B. einer SPS oder einem PC. Das ASI-System ist international genormt durch die Normen EN 50295 und IEC 62026-2 (vgl. "AS-Interface Die Lösung in der Automation", Rolf Becker, et. al., AS-International Association, 2002).

Auch wenn nachfolgend bei der Beschreibung des Standes der Technik sowie bei der Erläuterung der Erfindung in erster Linie auf das ASI-System Bezug genommen wird, so ist die Erfindung nicht auf die Verwendung in einem solchen ASI-System beschränkt, sondern kann grundsätzlich auch bei anderen Bussystemen bzw. bei anderen Arten von Busleitungen eingesetzt werden. Voraussetzung ist dabei lediglich, daß es sich um ein Bussystem handelt, bei dem über den Bus sowohl die Energieversorgung der Slaves und ggf. des Masters, als auch die Datenübertragung zwischen den Slaves untereinander sowie zwischen den Slaves und dem Master erfolgt. Derartige Bussysteme werden auch als "Loop Powered" Busse bzw. Bussysteme bezeichnet.

Das ASI-System besteht aus einem ASI-Master, mehreren ASI-Slaves, einem ASI-Netzteil und einer ASI-Leitung. Ein wesentlicher Bestandteil des ASI-Systems ist der ASI-Slave, der in der Regel als ASI-Chip realisiert ist und mit dem die Aktuatoren bzw. Sensoren an eine Busleitung, die ASI-Leitung, digital angekoppelt werden. Der ASI-Chip wird konstruktiv entweder in ein Modul eingebaut, an das dann konventionelle Aktuatoren und Sensoren angeschlossen werden, oder er wird direkt in den Aktuator bzw. Sensor eingebaut. Der ASI-Master bildet die Schnittstelle zwischen den Aktuatoren bzw. Sensoren und dem Kern der Steuerung, beispielsweise einer SPS oder einem PC (vgl. "AS-Interface Die Lösung in der Automation", Seite 53 ff).

Das ASI-Netzteil dient primär der Energieversorgung der Slaves (und damit auch der an die Slaves angeschlossenen Aktuatoren und Sensoren) und zumindest eines Teils des Masters. Hierzu stellt das ASI-Netzteil eine DC-Spannung von ca. 30V bei Strömen bis zu 8A zur Verfügung. Darüber hinaus dient das ASI-Netzteil auch zur Symmetrierung des ASI-Netzes und zur Datenentkopplung. Hierzu weißt das ASI-Netzteil eine Symmetrieschaltung und ein Datenentkopplungsnetzwerk auf, wobei das Datenentkopplungsnetzwerk aus zwei Induktivitäten und zwei parallel dazu geschalteten Widerständen besteht (vgl. "AS-Interface Die Lösung in der Automation", Seite 60 f).

Als ASI-Leitung wird ein ungeschirmtes Zweileiter-Flachbandkabel (2 x 1,5 mm²) oder ein Standard-Rundkabel verwendet, über das gleichzeitig Signale und Energie übertragen werden. Über die ASI-Leitung erfolgt damit sowohl die Energieversorgung der Slaves und des Masters, als auch die Datenübertragung zwischen den Slaves untereinander sowie zwischen den Slaves und dem Master (vgl. "AS-Interface Die Lösung in der Automation", Seite 56 - 60).

Zur gleichzeitigen Übertragung der Signale und der Energie über die ASI-Leitung ist ein spezielles Modulationsverfahren entwickelt worden, welches den zahlreichen Anforderungen des ASI-Systems in besonderer Weise genügt. Das Nachrichtensignal, das der Energieversorgung der ASI-Slaves überlagert wird, muß gleichstromfrei und relativ schmalbandig sein und darf zudem nicht in unzulässiger Weise elektromagnetisch abstrahlen. Aus diesen Gründen ist als Modulationsverfahren eine Alternierende Puls Modulation (APM) ausgewählt worden, wobei die Sende-Bitfolge zunächst in eine Manchester-codierte (MAN-codierte) Bitfolge umcodiert wird, die bei jeder Änderung des Sendesignals eine Phasenänderung vornimmt. Aus der codierten Bitfolge wird dann ein Sendestrom erzeugt, aus dem durch Differentiation der gewünschte Signalspannungspegel auf der ASI-Leitung erzeugt wird. Auf der Empfangsseite werden diese Spannungssignale auf der Leitung detektiert und wieder in die gesendete Bitfolge zurückgewandelt. Wenn dabei die Spannungspulse näherungsweise wie sin²-Pulse geformt werden, wird gleichzeitig auch den Forderungen nach niedriger Grenzfrequenz und geringer Störabstrahlung Rechnung getragen (vgl. "AS-Interface Die Lösung in der Automation", Seite 62 - 65).

Das ASI-System ist ein Master-Slave-System mit zyklischem Polling und nutzt einen Master pro Netz, der alle Teilnehmer (Slaves) zyklisch mit ihrer Adresse aufruft. Das ASI-System überträgt die Informationen (ASI-Nachrichten) zwischen einem Master und den verschiedenen Slaves somit nicht parallel, sondern seriell. Die ASI-Nachrichten sind kurz, einfach strukturiert und haben eine feste Länge. In jedem Abfragezyklus werden Informationen seriell vom Master zu jedem Slave und zurück übertragen. Sie können als Ein- oder als Ausgabedaten benutzt werden. Um keine zu großen Wartezeiten bei der seriellen Übertragung der Informationen vom Master zu den einzelnen Slaves bzw. umgekehrt zu haben, ist für das ASI-System eine bestimmte Struktur der über die ASI-Leitung übertragenen Signale vorgegeben. Diese Struktur der übertragenden Signale, d. h. die Struktur der ASI-Nachrichten, zusammen mit einer vorgegebenen maximalen Anzahl von an die ASI-Leitung anschließbaren ASI-Slaves, gewährleistet eine für die Praxis in vielen Fällen ausreichende Zykluszeit von maximal 5 ms.

Der Dialog des ASI-Masters mit einem ASI-Slave besteht immer aus der Kombination von Telegramm des ASI-Masters und Antworttelegramm des ASI-Slaves, Das Telegramm des ASI-Masters wird auch als Masteraufruf, das Antworttelegramm des ASI-Slaves als Slaveantwort bezeichnet. Wie üblich beginnen die Telegramme, d. h. die ASI-Nachrichten mit einer Startkennung und enden mit einer Stopkennung. Zwischen dem Masteraufruf und der Slaveantwort bzw. zwischen der Slaveantwort und einem neuen Masteraufruf ist jeweils eine Masterpause bzw. eine Slavepause vorgesehen. Der Masteraufruf besteht insgesamt aus vierzehn Bits, wobei darin fünf Adreßbits und fünf Informationsbits an den ASI-Slave enthalten sind. Die Slaveantwort besteht aus insgesamt sieben Bits, von denen vier Bits als Informationsbits an den ASI-Master vorgesehen sind. Die übrigen Bits, wie beispielsweise Startbit, Steuerbit, Paritätsbit oder Endbit, werden zur Datensicherung und Fehlererkennung verwendet.

Über die am Anfang des Masteraufrufs stehenden Adreßbits wird jedem ASI-Slave mitgeteilt, ob die nachfolgende Information für ihn oder für einen anderen ASI-Slave bestimmt ist. Jedem ASI-Slave ist dabei eine fünf Bit lange Adresse zugeordnet, wobei die Adresse 0 eine Sonderfunktion hat. Sie wird üblicherweise bei der Herstellung als Defaultwert benutzt, d. h. herstellungsmäßig ist den ASI-Slaves die Adresse 0 zugewiesen. Wenn dann beispielsweise ein defekter ASI-Slave ausgetauscht wird, wird im neuen ASI-Slave die Adresse 0 durch die Adresse des ausgefallenen ASI-Slaves ersetzt, was durch ein entsprechendes Kommando des ASI-Masters an den neuen ASI-Slave ausgeführt werden kann. Mit den fünf Adreßbits können somit im Normalfall maximal 31 Teilnehmer adressiert und an die ASI-Leitung angeschlossen werden. In einem Abfragezyklus wird jeder angeschlossene ASI-Slave - maximal 31 ASI-Slaves - vom ASI-Master angesprochen und sendet jeder ASI-Slave seine Slaveantwort mit den vier Informationsbits an den ASI-Master zurück (vgl. "AS-Interface Die Lösung in der Automation", Seite 66 - 72).

Aufgrund der an das ASI-System gestellten Anforderungen, ein praxisorientiertes Bussystem zur direkten Anbindung einfacher Sensoren und Aktuatoren an Steuerungen bereitzustellen, das an die jeweiligen örtlichen Anforderungen einfach angepaßt werden kann, sind bezüglich der Topologie eines ASI-Netzwerkes keine Beschränkungen vorgegeben worden. Die Topologie eines ASI-Netzwerkes ist somit beliebig wählbar, was die Projektierung sehr einfach gestaltet. Daher sind im klassischen ASI-System auch keine Leitungsabschlußwiderstände vorgesehen, was bei einer Beschränkung der maximalen Gesamtlänge des Bussystems auf 100m auch nicht erforderlich ist. Diese physikalische Grenze kann nicht ohne Verlust der Signalqualität überschritten werden, da ansonsten weiter entfernte Teilnehmer infolge fehlerhafter Übertragung nicht mehr zuverlässig erreicht werden können.

Ursache hierfür sind zum einen am Leitungsende auftretende Signalreflexionen und unterschiedliche Laufzeiten der Signale, durch die die Spannungssignale verzerrt werden, zum anderen eine bei größeren Länge der Busleitung nicht mehr zu vernachlässigende Dämpfung der Signalamplitude, was ebenfalls dazu führen kann, daß die übertragenden Signale nicht mehr fehlerfrei erkannt werden können. Dadurch können Kommunikationsfehler entstehen, die sicher erkannt werden müssen, wozu beim ASI-System von der Kenntnis von Redundanzen in Code und den festen Längen der Telegramme Gebrauch gemacht wird (vgl. AS-Interface "Die Lösung in der Automation", Seite 70f).

Probleme beim Betrieb eines Feldbus-Systems, insbesondere eines ASI-Systems können darüber hinaus dann auftreten, wenn einem ASI-Slave eine fehlerhafte Adresse zugewiesen wird, nämlich eine solche Adresse, die bereits für einen anderen ASI-Slave vergeben ist, so daß zwei Slaves dieselben Adresse aufweisen. Eine solche "Doppeladressierung" kann insbesondere dann auftreten, wenn einem Slave nachträglich bei dessen Austausch eine Adresse manuell über ein entsprechendes Adressierungsgerät zugeteilt wird. Die Konsequenz einer derartigen "Doppeladressierung" ist zum einen, daß bei einem Masteraufruf mit der doppelt vergebenen Adresse zwei Slaves antworten, zum anderen bei einem Masteraufruf mit der fälschlicherweise nicht vergebenen Adresse kein Slave antwortet erfolgt.

Die DE 101 34 538 A1 offenbart ein Überwachungsverfahren für ein Bussystem sowie eine damit korrespondierende Auswerteschaltung, bei der über die Busleitungen nur die Kommunikationssignale übertragen werden, während die Energie nicht über die Busleitungen sondern über zusätzliche Energieversorgungsanschlüsse zur Verfügung gestellt wird. Zur Überwachung der Kommunikation ist jedem Busteilnehmer eine Überwachungseinrichtung zugeordnet, die jeweils in einer Steckeinrichtung angeordnet ist, über die der jeweilige Busteilnehmer an den Bus angeschlossen ist. Über eine hochohmige Impedanzwandlereinrichtung als Spannungserfassungseinheit wird die Modulationsspannung abgegriffen, in einem A/D-Wandler digitalisiert und dann einem Mikrokontroller zugeführt, so dass letztlich eine Auswertung der zeitliche Verläufe der Spannungspegel auf den Busleitungen möglich ist.

Ein Nachteil der bekannten Überwachungseinrichtung besteht darin, dass aufgrund der am Leitungsende des Busses auftretenden Signalreflektionen und unterschiedlichen Laufzeiten der Signale die Spannungssignale verfälscht werden können, so dass die Auswertung der abgegriffenen Modulationsspannung u. U. zur Erkennung einer fehlerhaften Adressierung nicht ausreichend ist. Darüber hinaus ist es nachteilig, dass jedem Busteilnehmer eine Überwachungseinrichtung zugeordnet ist, so dass eine nachträgliche Einfügung der Überwachungseinrichtung in ein bestehendes System quasi nicht möglich.

Die DE 101 04 908 A1 beschreibt eine elektronische Vorrichtung zur Überwachung elektrisch erfassbarer Zustände und Größen von Bussystemen, wobei über eine Mehrzahl von Anschlüssen die elektrisch erfassbaren Zustände und Größen des Bussystems von der Busleitung abgetastet werden. Dazu ist die Vorrichtung dauerhaft in das Bussystem integrierte und mit den Busleitungen permanent verbunden. Dadurch, dass die Vorrichtung dauerhaft in dem Bussystem integriert ist, wozu die Vorrichtung mit ihren Anschlüssen in die Busleitung eingeschleift ist, so dass eine Unterbrechung bzw. Auftrennung der Busleitung erforderlich ist, ist diese Vorrichtung nicht dazu geeignet, problemlos nachträglich in ein bereits bestehendes Feldbus-System eingefügt zu werden.

Aus der DE 102 53 566 A1 ist ein ASI-System bekannt, bei dem zur Erkennung einer Doppeladressierung eine Überwachungseinrichtung vorgesehen ist, die den durch den ASI-Bus fließenden Modulationsstrom mißt und anhand der Amplitude des Modulationsstroms feststellt, ob der Modulationsstrom durch die Slaveantwort eines ASI-Slave oder durch die Überlagerung der Slaveantworten zweier ASI-Slaves hervorgerufen worden ist. Die bekannte Überwachungseinrichtung nutzt dabei die Tatsache aus, daß die durch einen Impuls einer Slaveantwort erzeugte Stromänderung typischerweise ca. 60 mA beträgt. Bei Überlagerung zweier Antwortimpulse, die von zwei Slaves mit derselben Adresse erzeugt werden, steigt die durch den ASI-Bus fließende Stromänderung somit auf etwa den doppelten Wert, d. h. ca. 120 mA. Mit Hilfe einer einfachen Schwellwerteeinstellung kann somit festgestellt werden, ob der durch den ASI-Bus fließende Modulationsstrom durch die Slaveantwort eines ASI-Slaves oder durch die gleichzeitige Slaveantwort zweier ASI-Slaves verursacht ist.

Ein Nachteil der bekannten Überwachungseinrichtung besteht jedoch darin, dass zur Messung des durch den ASI-Bus fließenden Stromes durch die Zwischenschaltung eines Widerstandes oder einer Induktivität ein Eingriff in den ASI-Bus erforderlich ist. Eine nachträgliche Einfügung der bekannten Überwachungseinrichtung in ein bestehendes ASI-System ist somit ohne eine Auftrennung des ASI-Busses nicht möglich. Der vorliegenden Erfindung liegt daher die Aufgabe zugrunde, eine Überwachungseinrichtung zur Erkennung einer fehlerhaften Adressierung eines Slave zur Verfügung zu stellen, welche problemlos nachträglich in ein bereits bestehendes Feldbus-System eingefügt werden kann. Darüber hinaus soll durch die Ausbildung einer entsprechenden Überwachungseinrichtung die Sicherheit eines bestehenden Feldbus-Systems weiter verbessert werden.

Diese Aufgabe ist bei der eingangs beschriebenen Überwachungseinrichtung mit den Merkmalen des Patentanspruchs 1 dadurch gelöst, dass die Spannungserfassungseinheit einen Differenzverstärker aufweist und die zwischen den beiden Leitern des Busses anstehende Modulationsspannung mittels des Differenzverstärkers rückwirkungsfrei abgreift und dass der Spannungserfassungseinheit eine Impedanzschaltung nachgeschaltet ist. Die Impedanzschaltung ist dabei so ausgebildet, dass ihre Impedanz an die Impedanz des Netzteils angepasst ist. In der Auswerteeinheit wird dabei der mit Hilfe der Impedanzschaltung ermittelte Strom I ausgewerte, aufgrund dessen eine fehlerhafte Adressierung mindestens eines Slaves, insbesondere eine Adressierung von zwei Slaves mit derselben Adresse, feststellbar ist.

Erfindungsgemäß wird somit die direkte Messung des Modulationsstromes i durch den Bus durch die Auswertung eines dem Modulationsstrom nachgebildeten Stromes I ersetzt, der proportional zur rückwirkungsfrei abgegriffenen Modulationsspannung des Busses ist. Die Messung der Modulationsspannung auf dem Bus ist dabei ohne eine Unterbrechung bzw. Auftrennung des Busses möglich. Dadurch, daß die Impedanzschaltung eine Nachbildung der Impedanz des Netzteiles darstellt, entspricht der mit Hilfe der Impedanzschaltung ermittelte und von der Auswerteeinheit ausgewertete Strom dem durch den Bus fließenden Modulationsstrom, so daß aufgrund des in der Auswerteeinheit ausgewerteten Stromes eine Beurteilung des Zustandes des Busses möglich ist, insbesondere eine "Doppeladressierung" feststellbar und optisch oder akustisch anzeigbar ist, ohne den durch den Bus fließenden Modulationsstrom direkt messen zu müssen.

Gemäß einer bevorzugten Ausgestaltung der erfindungsgemäßen Überwachungseinrichtung wird von der Auswerteeinheit auch die von der Spannungserfassungseinheit abgegriffene Modulationsspannung gemessen und zur Bestimmung einer fehlerhaften Adressierung, ausgewertet. Aufgrund der am Leitungsende des Busses auftretenden Signalreflektionen und unterschiedlichen Laufzeiten der Signale werden die Spannungssignale verfälscht, so daß alleine die Auswertung der abgegriffenen Modulationsspannung zur Erkennung einer fehlerhaften Adressierung nicht ausreichend ist. Die Modulationsspannung kann jedoch als zusätzliche Informationsquelle zur Auswertung herangezogen werden und dadurch die Sicherheit bei der Erkennung einer fehlerhaften Adressierung erhöhen. Darüber hinaus ist durch eine Auswertung der Modulationsspannung eine Beurteilung der Auswirkung der Signalreflektionen und der unterschiedlichen Laufzeiten der Signale auf die Signalqualität möglich.

Als Impedanzschaltung wird gemäß einem Ausführungsbeispiel eine Anordnung mehrerer elektrischer Bauelemente eingesetzt, wobei die Bauelemente so bestimmt und dimensioniert sind, daß sie insgesamt eine Impedanz aufweisen, die der Impedanz des Netzteiles im wesentlichen entspricht. Wird die Impedanzschaltung durch konkrete elektrische Bauelemente realisiert, so wird durch die Auswerteeinheit der durch die Impedanzschaltung fließende Strom I gemessen und ausgewertet.

Da die Impedanz des Netzteils bekannt ist, ist eine entsprechende Ausbildung der Impedanzschaltung durch die geeignete Verwendung entsprechender Bauelemente ohne weiteres möglich. Durch die Anordnung der Bauelemente wird dabei insbesondere das im Netzteil angeordnete Datenentkopplungsnetzwerk nachgebildet, so daß bei einem ASI-System die Impedanzschaltung entsprechend dem Datenentkopplungsnetzwerk des ASI-Netzteils zwei Induktivitäten von je 50 µH und zwei dazu parallel geschalteten Widerständen von je 39 Q aufweist. Darüber hinaus kann die Impedanzschaltung auch noch eine der Symmetrieschaltung entsprechende Parallelschaltung bestehend aus zwei Kapazitäten und zwei Widerständen aufweisen.

Gemäß einem alternativen Ausführungsbeispiel wird die Impedanzschaltung nicht hardwaremäßig sondern softwaremäßig realisiert, d. h. als Impedanzschaltung wird ein Softwaremodell eingesetzt, mit dessen Hilfe die Ermittlung des Stromes I numerisch erfolgt. Der Strom I wird somit durch eine Simulation ermittelt und nicht dadurch, daß ein durch eine Impedanzschaltung, die aus konkreten elektrischen Bauelementen besteht, fließender Strom I gemessen wird. Bei einer derartigen Realisierung der Impedanzschaltung wird die von der Spannungserfassungseinheit abgegriffene Modulationsspannung in der Auswerteschaltung digitalisiert und der Strom I durch Verknüpfung mit den Eigenschaften der Impedanz des Netzteils durch das Softwaremodell numerisch ermittelt. Hierzu müssen entsprechend leistungsfähige Analog-/Digitalwandler und Prozessoren verwendet werden, um ohne große Zeitverzögerung den Strom I ermitteln zu können.

Die Spannungserfassungseinheit, die die Modulationsspannung auf dem Bus rückwirkungsfrei abgreift, weist vorzugsweise einen Differenzverstärker mit einem Verstärkungsfaktor A = 1 auf. Die Spannungsversorgung des Differenzverstärkers erfolgt dabei gemäß einer vorteilhaften Ausgestaltung der Überwachungseinrichtung über den ASI-Bus selber. Die für den Betrieb des Differenzverstärkers benötigte Versorgungsspannung kann somit einfach von der Busleitung abgegriffen werden, wozu die Spannungserfassungseinheit zur Gleichspannungsentkopplung über ein LC-Netzwerk mit dem Busanschluß verbunden ist.

Die der Erfindung zugrunde liegende Aufgabe wird durch ein Verfahren gemäß Patentanspruch 8 gelöst. Das Verfahren weist dabei folgende Schritte auf:
- die Spannungserfassungseinheit greift die zwischen den beiden Leitern des Busses anstehende Modulationsspannung mittels des Differenzverstärkers rückwirkungsfrei ab;
- die Modulationsspannung wird der Impedanzschaltung zugeführt, deren Impedanz an die Impedanz des Netzteils angepaßt ist, so dass mittels der Impedanzschaltung ein Strom I ermittelt wird, der dem durch den Bus fließenden Strom i entspricht;
- die Auswerteeinheit wertet den mit Hilfe der Impedanzschaltung ermittelten Strom I aus, aufgrund dessen eine fehlerhafte Adressierung eines Slaves feststellbar ist.

Vorzugsweise wird auch bei dem Verfahren neben dem Strom I auch die von der Spannungserfassungseinheit abgegriffene Modulationsspannung gemessen und zur Erkennung des Zustandes des Busses ausgewertet. Dann können der mit Hilfe der Impedanzschaltung ermittelte Strom I und die gemessene Modulationsspannung zur Beurteilung des Zustandes des Busses ausgewertet werden. Darüber hinaus wird bei einer Ausführung des Verfahrens auch der zeitliche Zusammenhang zwischen Strom I und Modulationsspannung bzw. die zeitlich Veränderung von Strom I und Modulationsspannung zueinander ausgewertet und zur Beurteilung mit herangezogen. Mit dem Verfahren können dabei insbesondere die Signalqualität, der Zustand einzelner Buskomponenten, die Laufzeit einzelner Signale, Störsignale auf dem Bus sowie eine fehlerhaften Adressierung eines Slaves analysiert und vorzugsweise angezeigt und/oder an eine übergeordnete Stelle, beispielsweise einen Leitstand weitergeleitet werden.

Schließlich betrifft die vorliegende Erfindung noch ein eingangs beschriebenes ASI-System mit einem ASI-Master, mindestens zwei ASI-Slaves, einem ASI-Netzteil und einem ASI-Bus, bei dem die erfindungsgemäße Überwachungseinrichtung zur Erkennung einer fehlerhaften Adressierung mindestens eines ASI-Slaves an den ASI-Bus angeschlossen ist. Vorzugsweise ist dabei die Überwachungseinrichtung in der Nähe des ASI-Netzteils an den ASI-Bus angeschlossen, damit die von der Spannungserfassungseinheit abgegriffene Modulationsspannung möglich weitestgehend der Modulationsspannung entspricht, die über der Impedanz des ASI-Netzteils abfällt.

Gemäß einer bevorzugten Ausgestaltung sind die Überwachungseinrichtung und der ASI-Master in einem gemeinsamen Gehäuse angeordnet, so daß die Überwachungseinrichtung in dem ASI-Master integriert ist und damit die Überwachung einer fehlerfreien Adressierung der angeschlossenen ASI-Slaves ebenso wie die Kontrolle der fehlerfreien Kommunikation über die A-SI-Leitung im ASI-Master erfolgen kann. Dies hat den Vorteil, daß im ASI-Master vorhandene optische und/oder akustische Anzeigeeinrichtungen auch zur Anzeige einer durch die Überwachungseinrichtung erkannten Doppeladressierung zweier Slaves genutzt werden können.

Im einzelnen gibt es nun eine Vielzahl von Möglichkeiten, die erfindungsgemäße Überwachungseinrichtung, das Verfahren und das erfindungsgemäße ASI-System auszugestalten und weiterzubilden. Dazu wird verwiesen auf die den Patentansprüchen 1, 8 und 13 nachgeordneten Patentansprüche sowie auf die nachfolgende Beschreibung in Verbindung mit der Zeichnung. In der Zeichnung zeigen
- Fig. 1: eine Prinzipdarstellung eines erfindungsgemäßen ASI-Systems, und
- Fig. 2: ein Blockschaltbild einer Ausführung der Überwachungseinrichtung.

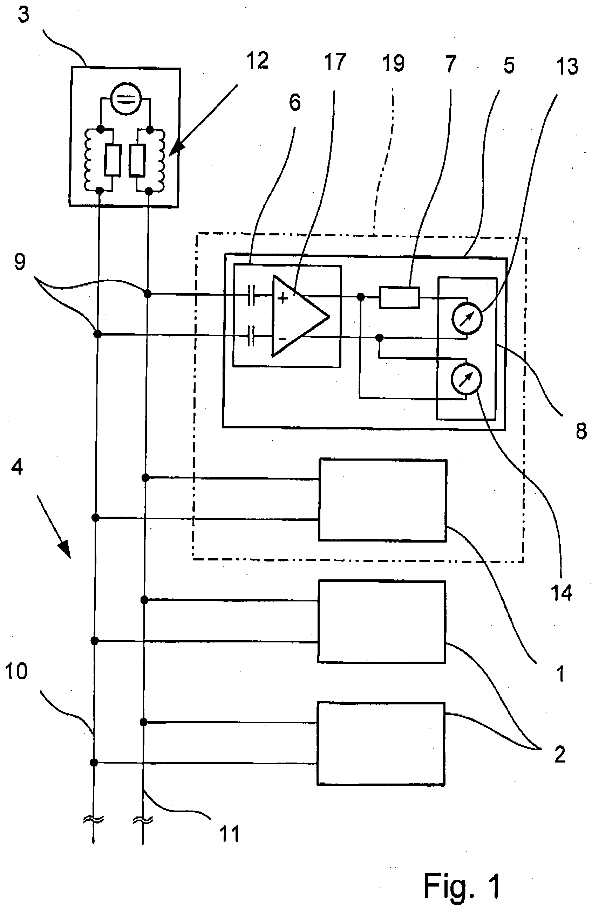

Fig. 1 zeigt eine Ausführungsform eines erfindungsgemäßen Feldbus-Systems, wobei nachfolgend - lediglich zur Erläuterung und nicht einschränkend - stets von einem ASI-System die Rede ist. Das ASI-System weist einen ASI-Master 1, mehrere ASI-Slaves 2, von denen hier nur zwei dargestellt sind, ein ASI-Netzteil 3 und einen ASI-Bus 4 auf. Über den ASI-Bus 4 sind dabei der ASI-Master 1, die ASI-Slaves 2 und das ASI-Netzteil 3 miteinander verbunden, wobei das ASI-Netzteil 3 die ASI-Slaves 2 und den ASI-Masters 1 mit Energie versorgt. Hierzu stellt das ASI-Netzteil 3 eine Gleichspannung von ca. 30 V bei Strömen bis zu 8 A zur Verfügung. Über den ASI-Bus 4 erfolgt neben der Energieübertragung gleichzeitig auch die Übertragung von Signalen zwischen dem ASI-Master 1 und den ASI-Slaves 2, wozu die Signale mittels eines speziellen Modulationsverfahrens als Wechselspannungssignale der Gleichspannung aufmoduliert werden.

Zusätzlich weist das ASI-System noch eine Überwachungseinrichtung 5 auf, die insbesondere zur Erkennung einer fehlerhaften Adressierung eines ASI-Slaves 2 in dem ASI-System dient. Die Überwachungseinrichtung 5 weist eine Spannungserfassungseinheit 6, eine Impedanzschaltung 7 und eine Auswerteeinheit 8 auf. Über den Busanschluß 9 ist die Spannungserfassungseinheit 6 an den ASI-Bus 4 angeschlossen, so daß die Spannungserfassungseinheit 5 die zwischen den beiden Leitern 10, 11 des ASI-Busses 4 anstehende Modulationsspannung rückwirkungsfrei abgreifen kann.

Die der Spannungserfassungseinheit 6 nachgeschaltete Impedanzschaltung 7 ist so ausgebildet, daß ihre Impedanz an die Impedanz 12 des ASI-Netzteils 3 derart angepaßt ist, so daß der durch die Impedanzschaltung 7 fließende Strom I dem durch den ASI-Bus 4 fließenden Modulationsstrom i entspricht. Durch die - nur symbolisch dargestellten - Strommessung 13 in der Auswerteeinheit 8 ist eine Adressierung von zwei ASI-Slaves 2 mit derselben Adresse einfach feststellbar, wozu insbesondere die Amplitude des gemessenen Stromes I ausgewertet wird und anhand eines Schwellwertes feststellbar ist, ob der Modulationsstrom i und damit auch der Strom I durch die Slaveantwort eines ASI-Slaves 2 oder durch die sich überlagernden Slavesantworten Zweier ASI-Slaves 2 mit derselben Adresse hervorgerufen worden ist. Zusätzlich zur Auswertung des durch die Impedanzschaltung 7 fließenden Stromes I erfolgt in der Auswerteeinheit 8 vorzugsweise auch noch eine Spannungsmessung 14 der von der Spannungserfassungseinheit 6 abgegriffenen Modulationsspannung.

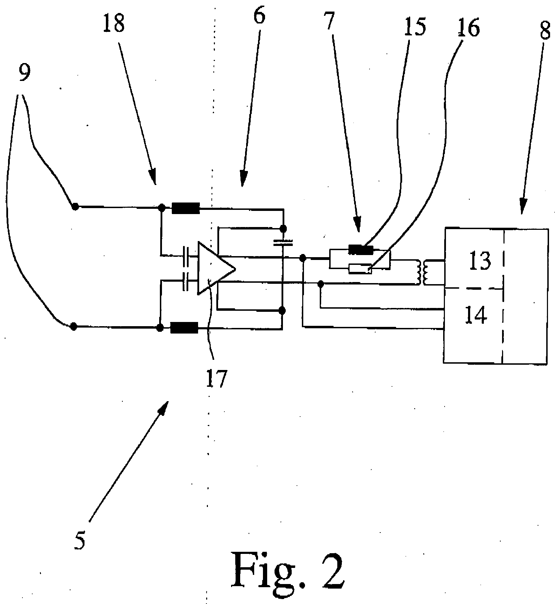

Fig. 2 zeigt eine bevorzugte Realisierung der Spannungserfassungseinheit 6 sowie der Impedanzschaltung 7. Die in Fig. 2 vereinfacht dargestellte Impedanzschaltung 7 besteht aus einer hier nur symbolisch dargestellten Parallelschaltung mindestens einer Induktivität 15 und eines Widerstandes 16. Die Spannungserfassungseinheit 6 weist einen Differenzverstärker 17 mit einem Verstärkungsfaktor A = 1 auf, der zur Gleichspannungsentkopplung über ein LC-Netzwerk 18 mit dem Busanschluß 9 verbunden ist, so daß die Spannungsversorgung des Differenzverstärkers 17 über den ASI-Bus 4 erfolgt. Eine getrennte Spannungsversorgung für die Überwachungseinrichtung 5 ist somit nicht erforderlich, so daß die Überwachungseinrichtung 5 unter Beibehaltung der Topologiefreiheit einfach über den Busanschluß 9 an den ASI-Bus 4 angeschlossen werden kann.

Aus Fig. 1 ist noch erkennbar, daß die Überwachungseinrichtung 5 in der Nähe des ASI-Netzteils 3 an den ASI-Bus 4 angeschlossen ist. Dabei ist es jedoch nicht unbedingt erforderlich, daß die Überwachungseinrichtung 5 unmittelbar angrenzend an das ASI-Netzteil 3 angeschlossen ist; möglich ist beispielsweise auch, daß zwischen dem ASI-Netzteil 3 und der Überwachungseinrichtung 5 der ASI-Master 1 und/oder ein ASI-Slave 2 an den ASI-Bus 4 angeschlossen ist.

Vorzugsweise ist die Überwachungseinrichtung 5 zusammen mit dem ASI-Master 1 in einem in Fig. 1 gestrichelt dargestellten gemeinsamen Gehäuse 19 angeordnet, so daß eine von der Überwachungseinrichtung 5 erkannte Doppeladressierung zweier ASI-Slaves 2 direkt im ASI-Master 1 vorliegt, so daß beispielsweise über den ASI-Master 1 selbständig eine Neuadressierung der ASI-Slaves 2 vorgenommen werden kann. Ebenso kann über den ASI-Master 1 das Vorliegen einer Doppeladressierung optisch und/oder akustisch angezeigt werden.

## Patentansprüche

1. Überwachungseinrichtung zur Erkennung einer fehlerhaften Adressierung eines Slaves (2) in einem einen Master (1), mehrere Slaves (2), ein Netzteil (3) und einen Signale und Energie übertragenden Bus (4) aufweisenden Feldbus-System, mit einer Spannungserfassungseinheit (6) und mit einer Auswerteeinheit (8), wobei die Spannungserfassungseinheit (6) einen Busanschluss (9) zum Anschluss an den Bus und einen Differenzverstärker (17) aufweist und die zwischen den beiden Leitern (10, 11) des Busses (4) anstehende Modulationsspannung mittels des Differenzverstärkers (17) rückwirkungsfrei abgreift,
**dadurch gekennzeichnet,**
**dass** der Spannungserfassungseinheit (6) eine Impedanzschaltung (7) nachgeschaltet ist, die so ausgebildet ist, dass ihre Impedanz an die Impedanz (12) des Netzteils (3) angepasst ist, und
**dass** die Auswerteeinheit (8) einen mit Hilfe der Impedanzschaltung (7) ermittelten Strom I auswertet, der proportional zur rückwirkungsfrei abgegriffenen Modulationsspannung ist, anhand dessen die fehlerhafte Adressierung des Slaves (2) feststellbar ist.

2. Überwachungseinrichtung nach Anspruch 1, **dadurch gekennzeichnet, dass** die Auswerteeinheit (8) den ermittelten Strom I zur Bestimmung der Adressierung von zwei Slaves (2) mit derselben Adresse auswertet.

3. Überwachungseinrichtung nach Anspruch 1 oder 2, **dadurch gekennzeichnet, dass** die Auswerteeinheit (8) auch die von der Spannungserfassungseinheit (6) abgegriffene Modulationsspannung misst und zur Bestimmung der fehlerhaften Adressierung eines Slaves, auswertet.

4. Überwachungseinrichtung nach einem der Ansprüche 1 bis 3, **dadurch gekennzeichnet, dass** als Impedanzschaltung (7) eine Anordnung mehrerer Bauelemente eingesetzt ist, die mindestens eine Induktivität (15) und mindestens einen Widerstand (16) und/oder mindestens eine Kapazität und mindestens einen Widerstand aufweist, so dass durch die Auswerteeinheit (8) der durch die Impedanzschaltung (7) fließenden Strom I messbar ist.

5. Überwachungseinrichtung nach einem der Ansprüche 1 bis 3, **dadurch gekennzeichnet, dass** als Impedanzschaltung (7) ein Softwaremodell eingesetzt ist, so dass die Impedanzanpassung und die Ermittlung des Stromes I numerisch erfolgt.

6. Überwachungseinrichtung nach einem der Ansprüche 1 bis 5, **dadurch gekennzeichnet, dass** die Spannungsversorgung des Differenzverstärkers (17) über den Bus (4) erfolgt.

7. Überwachungseinrichtung nach einem der Ansprüche 1 bis 6, **dadurch gekennzeichnet, dass** die Spannungserfassungseinheit (6) zur Gleichspannungsentkopplung über ein LC-Netzwerk (18) mit dem Busanschluss (9) verbunden ist.

8. Verfahren zur Erkennung einer fehlerhaften Adressierung eines Slaves (2) in einem einen Master (1), mehrere Slaves (2), ein Netzteil (3) und einen Signale und Energie übertragenden Bus (4) aufweisenden Feldbus-System, mit einer Überwachungseinrichtung (5), die eine Spannungserfassungseinheit (6) mit einem Differenzverstärker (17), eine der Spannungserfassungseinheit (6) nachgeschaltete Impedanzschaltung (7) und eine Auswerteeinheit (8) aufweist,
**gekennzeichnet durch** die folgende Verfahrensschritte:
• die Spannungserfassungseinheit (6) greift die zwischen den beiden Leitern (10, 11) des Busses (4) anstehende Modulationsspannung mittels des Differenzverstärkers (17) ab;
• die Modulationsspannung wird der Impedanzschaltung (7) zugeführt, deren Impedanz an die Impedanz (12) des Netzteils (3) angepasst ist, so dass mittels der Impedanzschaltung (7) ein Strom I ermittelt wird, der dem **durch** den Bus (4) fließenden Strom i entspricht;
• die Auswerteeinheit (8) wertet den mit Hilfe der Impedanzschaltung (7) ermittelten Strom I aus, aufgrund dessen die fehlerhafte Adressierung des Slaves (2) feststellbar ist.

9. Verfahren nach Anspruch 8, **dadurch gekennzeichnet, dass** von der Auswerteeinheit (8) auch die von der Spannungserfassungseinheit (6) abgegriffene Modulationsspannung gemessen und zur Bestimmung der fehlerhaften Adressierung eines Slaves ausgewertet wird.

10. Verfahren nach Anspruch 9, **dadurch gekennzeichnet, dass** der mit Hilfe der Impedanzschaltung (7) ermittelten Strom I und/oder die gemessene Modulationsspannung sowie ggf. deren zeitlicher Zusammenhang zur Beurteilung der über den Bus (4) übertragenen Signalqualität, zur Beurteilung des Zustandes einzelner Buskomponenten, zur Laufzeitüberwachung einzelner Signale, zur Analyse von Störsignalen oder zur Bestimmung der fehlerhaften Adressierung eines Slaves ausgewertet und vorzugsweise angezeigt und/oder weitergeleitet werden.

11. Verfahren nach einem der Ansprüche 8 bis 10, wobei als Impedanzschaltung (7) eine Anordnung mehrerer Bauelemente eingesetzt wird, die mindestens eine Induktivität (15) und mindestens einen Widerstand (16) und/oder mindestens eine Kapazität und mindestens einen Widerstand aufweist, **dadurch gekennzeichnet, dass** die Auswerteeinheit (8) den durch die Impedanzschaltung (7) fließenden Strom (I) misst.

12. Verfahren nach einem der Ansprüche 8 bis 10, wobei als Impedanzschaltung (7) ein Softwaremodell eingesetzt wird, **dadurch gekennzeichnet, dass** in der Auswerteschaltung (8) die von der Spannungserfassungseinheit (6) abgegriffene Modulationsspannung digitalisiert wird und der Strom I durch das Softwaremodell numerisch ermittelt wird.

13. Aktuator-Sensor-Interface-System mit einem Aktuator-Sensor-Interface-Master (1), mindestens zwei Aktuator-Sensor-Interface-Slaves (2), einem Aktuator-Sensor-Interface-Netzteil (3), einem Aktuator-Sensor-Interface-Bus (4) und einer Überwachungseinrichtung (5),
wobei das Aktuator-Sensor-Interface-Netzteil (3) die Aktuator-Sensor-Interface-Slaves (2) über den Aktuator-Sensor-Interface-Bus (4) mit einer Gleichspannung versorgt,
wobei über den Aktuator-Sensor-Interface-Bus (4) Signale, die als Wechselspannungssignale der Gleichspannung aufmoduliert sind, seriell zwischen dem Aktuator-Sensor-Interface-Master (1) und den Aktuator-Sensor-Interface-Slaves (2) übertragbar sind,
wobei jedem Aktuator-Sensor-Interface-Slave (2) eine binäre Adresse zugeordnet ist, so dass jeder Aktuator-Sensor-Interface-Slave (2) durch einen seine Adresse enthaltenden Masteraufruf vom Aktuator-Sensor-Interface-Master (1) zur Abgabe einer Slaveantwort veranlasst werden kann, und
wobei die Überwachungseinrichtung (5) gemäß einem der Ansprüche 1 bis 7 ausgestaltet und zur Erkennung einer fehlerhaften Adressierung mindestens eines Aktuator-Sensor-Interface-Slaves (2) an den Aktuator-Sensor-Interface-Bus (4) angeschlossen ist.

14. Aktuator-Sensor-Interface-System nach Anspruch 13, **dadurch gekennzeichnet, dass** die Überwachungseinrichtung (5) in der Nähe des Aktuator-Sensor-Interface-Netzteils (3) an den Aktuator-Sensor-Interface-Bus (4) angeschlossen ist.

15. Aktuator-Sensor-Interface-System nach Anspruch 13 oder 14, **dadurch gekennzeichnet, dass** die Überwachungseinrichtung (5) und der Aktuator-Sensor-Interface-Master (1) in einem gemeinsamen Gehäuse (19) angeordnet sind.

## Claims

1. Monitoring device for detecting incorrect addressing of a slave (2) in a field bus system having a master (1), a plurality of slaves (2), a power supply unit (3) and a bus (4) which transmits signals and energy, having a voltage recording unit (6) and an evaluation unit (8),
the voltage recording unit (6) having a bus connection (9) for connection to the bus and a differential amplifier (17) and tapping off the modulation voltage present between the two conductors (10, 11) of the bus (4) in a non-reactive manner by means of the differential amplifier (17),
**characterized in**
**that** an impedance circuit (7) is connected downstream of the voltage recording unit (6) and is designed in such a manner that its impedance is matched to the impedance (12) of the power supply unit (3), and
**that** the evaluation unit (8) evaluates a current I, which is determined with the aid of the impedance circuit (7) and which is proportional to the modulation voltage tapped off in a non-reactive manner and can be used to determine the incorrect addressing of the slave (2).

2. Monitoring device according to Claim 1, **characterized in that** the evaluation unit (8) evaluates the determined current I in order to determine the addressing of two slaves (2) with the same address.

3. Monitoring device according to Claim 1 or 2, **characterized in that** the evaluation unit (8) also measures the modulation voltage tapped off by the voltage recording unit (6) and evaluates it in order to determine the incorrect addressing of a slave.

4. Monitoring device according to one of Claims 1 to 3, **characterized in that** an arrangement of a plurality of components having at least one inductance (15) and at least one resistor (16) and/or at least one capacitance and at least one resistor is used as the impedance circuit (7), with the result that the current I flowing through the impedance circuit (7) can be measured by the evaluation unit (8).

5. Monitoring device according to one of Claims 1 to 3, **characterized in that** a software model is used as the impedance circuit (7), with the result that the impedance matching and the determination of the current I are carried out numerically.

6. Monitoring device according to one of Claims 1 to 5, **characterized in that** the differential amplifier (17) is supplied with voltage via the bus (4).

7. Monitoring device according to one of Claims 1 to 6, **characterized in that** the voltage recording unit (6) is connected to the bus connection (9) for DC voltage decoupling via an LC network (18).

8. Method for detecting incorrect addressing of a slave (2) in a field bus system having a master (1), a plurality of slaves (2), a power supply unit (3) and a bus (4) which transmits signals and energy, with a monitoring device (5) which has a voltage recording unit (6) with a differential amplifier (17), an impedance circuit (7) connected downstream of the voltage recording unit (6) and an evaluation unit (8),
**characterized by** the following method steps:
• the voltage recording unit (6) taps off the modulation voltage present between the two conductors (10, 11) of the bus (4) by means of the differential amplifier (17);
• the modulation voltage is supplied to the impedance circuit (7), the impedance of which is matched to the impedance (12) of the power supply unit (3), with the result that a current I corresponding to the current i flowing through the bus (4) is determined by means of the impedance circuit (7);
• the evaluation unit (8) evaluates the current I which is determined with the aid of the impedance circuit (7) and on the basis of which the incorrect addressing of the slave (2) can be determined.

9. Method according to Claim 8, **characterized in that** the modulation voltage tapped off by the voltage recording unit (6) is also measured by the evaluation unit (8) and is evaluated in order to determine the incorrect addressing of a slave.

10. Method according to Claim 9, **characterized in that** the current I determined with the aid of the impedance circuit (7) and/or the measured modulation voltage and possibly their temporal relationship is/are evaluated and preferably displayed and/or forwarded in order to assess the signal quality transmitted via the bus (4), in order to assess the state of individual bus components, in order to monitor the propagation time of individual signals, in order to analyse interference signals or in order to determine the incorrect addressing of a slave.

11. Method according to one of Claims 8 to 10, wherein an arrangement of a plurality of components having at least one inductance (15) and at least one resistor (16) and/or at least one capacitance and at least one resistor being used as the impedance circuit (7), **characterized in that** the evaluation unit (8) measures the current I flowing through the impedance circuit (7).

12. Method according to one of Claims 8 to 10, wherein a software model being used as the impedance circuit (7), **characterized in that** the modulation voltage tapped off by the voltage recording unit (6) is digitized in the evaluation circuit (8) and the current I is numerically determined by the software model.

13. Actuator/sensor interface system having an actuator/sensor interface master (1), at least two actuator/sensor interface slaves (2), an actuator/ sensor interface power supply unit (3), an actuator/sensor interface bus (4) and a monitoring device (5),
wherein the actuator/sensor interface power supply unit (3) supplying the actuator/sensor interface slaves (2) with a DC voltage via the actuator/sensor interface bus (4),
wherein signals which are modulated as AC voltage signals onto the DC voltage being able to be serially transmitted between the actuator/sensor interface master (1) and the actuator/sensor interface slaves (2) via the actuator/sensor interface bus (4),
wherein a binary address being assigned to each actuator/sensor interface slave (2), with the result that each actuator/sensor interface slave (2) can be caused from the actuator/sensor interface master (1) to output a slave response by a master call, which contains its address, and
wherein the monitoring device (5) being configured according to one of Claims 1 to 7 and being connected to the actuator/sensor interface bus (4) in order to detect incorrect addressing of at least one actuator/sensor interface slave (2).

14. Actuator/sensor interface system according to Claim 13, **characterized in that** the monitoring device (5) is connected to the actuator/sensor interface bus (4) in the vicinity of the actuator/sensor interface power supply unit (3).

15. Actuator/sensor interface system according to Claim 13 or 14, **characterized in that** the monitoring device (5) and the actuator/sensor interface master (1) are arranged in a common housing (19).

## Revendications

1. Dispositif de surveillance destiné à détecter un adressage erroné d'un esclave (2) dans un système de bus de terrain comportant un maître (1), plusieurs esclaves (2), une bloc d'alimentation (3) et un bus (4) transmettant des signaux et de l'énergie,
comportant une unité de détection de tension (6) et une unité d'évaluation (8), dans lequel l'unité de détection de tension (6) comporte une borne de bus (9) permettant un raccordement au bus, et un amplificateur différentiel (17) et acquiert sans rétroaction la tension de modulation présente entre les deux conducteurs (10, 11) du bus (4) au moyen de l'amplificateur différentiel (17),
**caractérisé en ce**
**qu'**un circuit d'impédance (7) est connectée en aval de l'unité de détection de tension (6), le circuit d'impédance (7) est conçu de manière à ce que son impédance soit adaptée à l'impédance (12) du bloc d'alimentation (3), et
**que** l'unité d'évaluation (8) évalue un courant I, obtenu à l'aide du circuit d'impédance (7), qui est proportionnel à la tension de modulation acquise sans rétroaction et sur la base de lequel il peut être établi que l'adressage de l'esclave (2) est erroné.

2. Dispositif de surveillance selon la revendication 1, **caractérisé en ce que** l'unité d'évaluation (8) évalue le courant I obtenu pour déterminer l'adressage de deux esclaves (2) ayant la même adresse.

3. Dispositif de surveillance selon la revendication 1 ou 2, **caractérisé en ce que** l'unité d'évaluation (8) mesure également la tension de modulation acquise par l'unité de détection de tension (6) et l'évalue pour déterminer l'adressage erroné d'un esclave.

4. Dispositif de surveillance selon l'une quelconque des revendications 1 à 3, **caractérisé en ce qu'**on utilise en tant que circuit d'impédance (7) un système de plusieurs composants qui comporte au moins une inductance (15) et au moins une résistance (16) et/ou au moins une capacité et au moins une résistance, de manière à ce que le courant I passant à travers le circuit d'impédance (7) puisse être mesuré au moyen de l'unité d'évaluation (8).

5. Dispositif de surveillance selon l'une quelconque des revendications 1 à 3, **caractérisé en ce qu'**on utilise en tant que circuit d'impédance (7) un modèle logiciel de manière à ce que l'adaptation d'impédance et l'obtention du courant I soient effectués numériquement.

6. Dispositif de surveillance selon l'une quelconque des revendications 1 à 5, **caractérisé en ce que** l'alimentation en tension de l'amplificateur différentiel (17) est effectuée par l'intermédiaire du bus (4).

7. Dispositif de surveillance selon l'une quelconque des revendications 1 à 6, **caractérisé en ce que** l'unité de détection de tension (6) est connectée à la borne de bus (9), à des fins de découplage de la tension continue, par l'intermédiaire d'un réseau LC (18).

8. Procédé de détection d'un adressage erroné d'un esclave (2) dans un système de bus de terrain comportant un maître (1), plusieurs esclaves (2), un bloc d'alimentation (3) et un bus (4) transmettant des signaux et de l'énergie, comportant un dispositif de surveillance (5) qui comprend une unité de détection de tension (6) avec d'un amplificateur différentiel (17), un circuit d'impédance (7) connecté en aval de l'unité de détection de tension (6) et une unité d'évaluation (8),
**caractérisé par** les étapes de procédé suivantes :
- l'unité de détection de tension (6) acquiert la tension de modulation présente entre les deux conducteurs (10, 11) du bus (4) au moyen de l'amplificateur différentiel (17) ;
- la tension de modulation est délivrée au circuit d'impédance (7) dont l'impédance est adaptée à l'impédance (12) du bloc d'alimentation (3) de manière à obtenir au moyen du circuit d'impédance (7) un courant I qui correspond au courant i passant à travers le bus (4) ;
- l'unité d'évaluation (8) évalue le courant I obtenu à l'aide du circuit d'impédance (7), sur la base duquel il peut être établi que l'adressage de l'esclave (2) est erroné.

9. Procédé selon la revendication 8, **caractérisé en ce que** la tension de modulation acquise par l'unité de détection de tension (6) est aussi mesurée par l'unité d'évaluation (8) et est évaluée pour déterminer l'adressage erroné d'un esclave.

10. Procédé selon la revendication 9, **caractérisé en ce que** le courant I obtenu à l'aide du circuit d'impédance (7) et/ou la tension de modulation mesurée et facultativement sa relation par rapport au temps, afin d'estimer la qualité du signal transmis par l'intermédiaire du bus (4), d'estimer l'état de composants individuels du bus, de surveiller le temps de propagation de signaux individuels, d'analyser des signaux parasites ou de déterminer l'adressage erroné d'un esclave et, de préférence, de les afficher et/ou de les retransmettre.

11. Procédé selon l'une quelconque des revendications 8 à 10, dans lequel on utilise en tant que circuit d'impédance (7) un système de plusieurs composants qui comporte au moins une inductance (15) et au moins une résistance (16) et/ou au moins une capacité et au moins une résistance, **caractérisé en ce que** l'unité d'évaluation (8) mesure le courant I passant à travers le circuit d'impédance (7).

12. Procédé selon l'une quelconque des revendications 8 à 10, dans lequel on utilise en tant que circuit d'impédance (7) un modèle logiciel, **caractérisé en ce qu'**une tension de modulation acquise par l'unité de détection de tension (6) est numérisée dans l'unité d'évaluation (8) et **en ce que** le courant I est obtenu numériquement par le modèle logiciel.

13. Système d'interface actionneur-capteur comportant un maître d'interface actionneur-capteur (1), au moins deux esclaves d'interface actionneur-capteur (2), un bloc d'alimentation d'interface actionneur-capteur (3), un bus d'interface actionneur-capteur (4) et un dispositif de surveillance (5),
dans lequel le bloc d'alimentation d'interface actionneur-capteur (3) alimente l'esclave d'interface actionneur-capteur (2) en tension continue par l'intermédiaire du bus d'interface actionneur-capteur (4),
dans lequel des signaux qui sont surmodulés en tant que signaux de tension alternative sur la tension continue peuvent être transmis en série par l'intermédiaire du bus d'interface actionneur-capteur (4) entre le maître d'interface actionneur-capteur (1) et l'esclave d'interface actionneur-capteur (2),
dans lequel une adresse binaire est associée à chaque esclave d'interface actionneur-capteur (2) de manière à pouvoir ordonner à chaque esclave d'interface actionneur-capteur (2), par l'intermédiaire d'une instruction de maître contenant son adresse provenant du maître d'interface actionneur-capteur (1), de délivrer une réponse d'esclave, et
dans lequel le dispositif de surveillance (5) est conçu selon l'une quelconque des revendications 1 à 7 et est raccordé au bus d'interface actionneur-capteur (4) pour détecter un adressage erroné d'au moins un esclave d'interface actionneur-capteur (2).

14. Système d'interface actionneur-capteur selon la revendication 13, **caractérisé en ce que** le dispositif de surveillance (5) est raccordé au bus d'interface actionneur-capteur (4) à proximité du bloc d'alimentation d'interface actionneur-capteur (3).

15. Système d'interface actionneur-capteur selon la revendication 13 ou 14, **caractérisé en ce que** le dispositif de surveillance (5) et le maître d'interface actionneur-capteur (1) sont disposés dans un boîtier commun (19).
